**Europäisches Patentamt**

**European Patent Office**

**Office européen des brevets**

(19)

(11) Veröffentlichungsnummer : **0 069 791**
**B1**

(12) **EUROPÄISCHE PATENTSCHRIFT**

(45) Veröffentlichungstag der Patentschrift :
25.07.84

(21) Anmeldenummer : 81105411.3

(22) Anmeldetag : 11.07.81

(51) Int. Cl.³ : **H 04 N  5/12**

(54) **Integrierte Schaltung für Fernsehempfänger mit einer Synchronsignaltrennschaltung mit Klemmregelschaltung.**

(43) Veröffentlichungstag der Anmeldung :
**19.01.83 Patentblatt 83/03**

(45) Bekanntmachung des Hinweises auf die Patenterteilung : **25.07.84 Patentblatt 84/30**

(84) Benannte Vertragsstaaten :
**DE FR GB IT NL**

(56) Entgegenhaltungen :
**DE-A- 1 813 041**
**DE-A- 2 250 546**
**DE-A- 2 933 471**
**DE-B- 2 617 100**
**Datenbuch 1981, ITT Intermetall "Integrierte Schaltungen für Rundfunk- und Fernsehempfänger, 1981/6
S. 100-103**
**Zeitschrift "Elektronik aktuell, 1976, Nr. 2, S. 7-14**

(73) Patentinhaber : **Deutsche ITT Industries GmbH**
**Hans-Bunte-Strasse 19 Postfach 840**
**D-7800 Freiburg (DE)**
**DE**
**ITT INDUSTRIES INC.**
**320 Park Avenue**
**New York, NY 10022 (US)**
**FR GB IT NL**

(72) Erfinder : **Elmis, Herbert, Ing.-grad**
**Berliner Strasse 86**
**D-7809 Denzlingen (DE)**

(74) Vertreter : **Stutzer, Gerhard, Dr.**
**Deutsche ITT Industries GmbH Patent- und Lizenzabteilung Hans-Bunte-Strasse 19 Postfach 840**
**D-7800 Freiburg (DE)**

## Beschreibung

Die Erfindung betrifft eine integrierte Schaltung für Fernsehempfänger mit einer Synchronsignaltrennschaltung mit Klemmregelschaltung, die den relativen Abtrennpegel für das Synchronsignal unabhängig von dessen Amplitude macht. Dabei dient der Integration des Abtrennpegels und des Schwarzschulterpegels ein erstes und ein zweites RC-Glied der im Oberbegriff des Anspruchs näher angegebenen Art. Die integrierte Schaltung enthält ferner eine Koinzidenzstufe, den spannungsgesteuerten Zeilenoszillator, den Phasenvergleicher für die Zeilenoszillator- und die Zeilensynchronsignale, eine Torschaltung, eine Bildsynchronimpuls-Integrierstufe und den Bildoszillator, vergleiche die näheren Einzelheiten zu diesen Teilschaltungen im Oberbegriff des Anspruchs. Eine derartige integrierte Schaltung ist aus dem Datenbuch 1981 « Integrierte Schaltungen für Rundfunk- und Fernsehempfänger », ITT-Intermetall, Freiburg, Ausgabe 1981/6, Seiten 100 bis 103 (Bestellnummer 6200-172-1D) unter der Bezeichnung TDA 1950, TDA 1950 F bekannt. Nähere Einzelheiten bezüglich der Koinzidenzstufe und der Torschaltung ergeben sich ferner aus der Zeitschrift « Elektronik aktuell », 1976, Nr. 2, Seiten 7 bis 14 bezüglich der integrierten Schaltungen TDA 9400, TDA 9500, welche beiden Veröffentlichungen auf die Anmelderinnen zurückgehen.

Bei der bekannten Klemmregelschaltung mit den beiden Serien-RC-Gliedern und dem verbindenden Widerstand ist der Schaltpegel für alle Zeilensynchronimpulse gleich, da sich ein Gleichgewicht zwischen dem Aufladestrom und dem Entladestrom des Kondensators C1 einstellt. Die Zeitkonstante dieses RC-Gliedes ist dabei so gewählt, daß bei Amplitudenschwankungen des FBAS-Signals oder Gleichpegel-Schwankungen, z. B. durch Netzbrumm im FBAS-Signal, der Abtrennpegel relativ zum Spitzenwert konstant bleibt. Diese Zeitkonstante ist im allgemeinen kleiner als 20 ms.

Während der im FBAS-Signal enthaltenen Bildsynchronimpulse hat diese Schaltung jedoch den Nachteil, daß sich der Abtrennpegel während dieser Impulse so verschiebt, daß für die nachfolgenden Zeilensynchronimpulse der nächsten Zeile der Abtrennpegel größer als im geschilderten Normalfall ist. Wegen der endlichen Flankensteilheit der Zeilensynchronimpulse sind daher die am Ausgang der Synchronsignaltrennschaltung auftretenden abgetrennten Zeilensynchronimpulse in der Phase etwas verschoben, so daß am Anfang jedes Bildes die Zeilensynchronisierung einen leichten Phasenfehler aufweist.

Ein weiterer Nachteil der bekannten Schaltung besteht darin, daß der Abtrennpegel durch entsprechend breite Störimpulse so weit verschoben werden kann, daß die nachfolgenden Zeilensynchronimpulse für eine gewisse Zeit nicht abgetrennt werden können.

Hier will die im Anspruch gekennzeichnete Erfindung Abhilfe schaffen, deren Aufgabe es ist, die bekannte integrierte Schaltung so zu modifizieren, daß die erwähnten Phasenfehler und die beschriebene Störanfälligkeit nicht mehr auftreten bzw. weitgehend vermieden sind. Der Vorteil der Erfindung liegt somit unmittelbar in der Aufgabenlösung ; es tritt nämlich keine Verschiebung des Synchronimpuls-Abtrennpegels während des Bildwechsels auf, und auch bei langen Störimpulsen oder durch starke Reflexionen beim Fernsehempfang mit entsprechenden Geistersignalen tritt keine Störung der Impulsabtrennung auf.

Die Erfindung wird nun anhand der Figuren der Zeichnung näher erläutert.

Figur 1 zeigt schematisch das Blockschaltbild eines Ausführungsbeispiels der ersten Lösungsvariante der Erfindung,

Figur 2 zeigt in Form eines Blockschaltbildes ein Ausführungsbeispiel der zweiten Lösungsvariante der Erfindung und

Figur 3 zeigt das Blockschaltbild einer Ausführungsform der dritten Lösungsvariante.

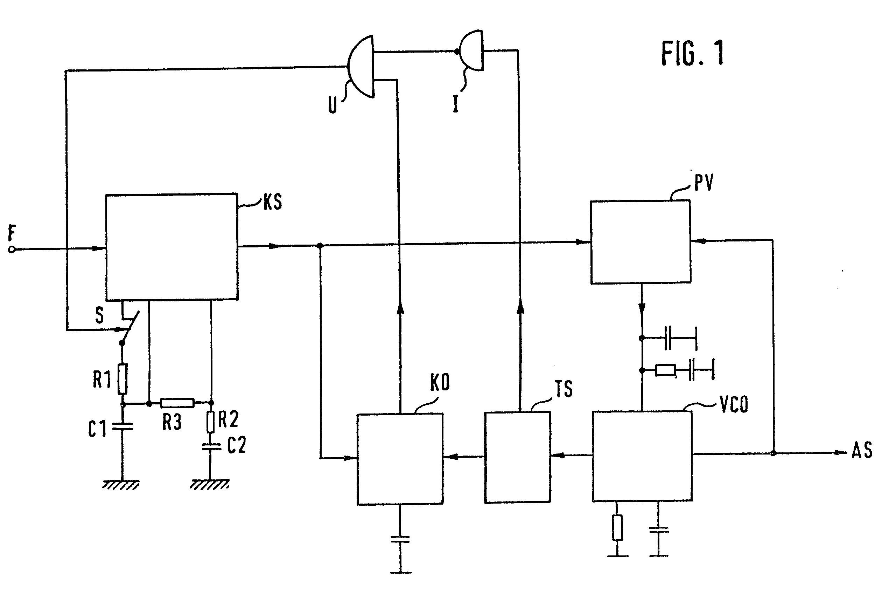

Das Blockschaltbild der ersten Lösungsvariante nach Fig. 1 zeigt den spannungsgesteuerten Zeilenoszillator VCO, der über den Phasenvergleicher PV auf konstante Frequenz und Phase geregelt wird, wobei diesem das Ausgangssignal des Zeilenoszillators VCO und das aus der Synchronsignaltrennschaltung KS stammende Zeilensynchronsignal zugeführt sind. Der Zeilenoszillator VCO steuert ferner die Torschaltung TS, die entsprechend dem bekannten Stand der Technik nach der eingangs genannten Zeitschrift « Elektronik aktuell » im Synchronenbetrieb Ausgangsimpulse erzeugt, die mindestens gleich der Dauer der gesendeten Zeilensynchronimpulse einer Zeile sind, also diese gerade überdecken. Bei der bekannten Anordnung dient die Torschaltung TS der Störimpulsunterdrückung während des Zeilenhinlaufs. Bei der Erfindung werden die Ausgangsimpulse der Torschaltung TS mittels des Inverters I invertiert und dem einen Eingang des UND-Gatters U zugeführt.

Im Ausführungsbeispiel der Fig. 1 ist ferner die Koinzidenzstufe KO gezeigt, von deren in der genannten Zeitschrift näher beschriebenen mehreren Funktionen diejenige bei der Erfindung ausgenutzt ist, die sich auf die Abgabe zweier unterschiedlicher Signalpegel für synchronen bzw. nichtsynchronen Betrieb bezieht. Dieses Ausgangssignal ist dem zweiten Eingang des UND-Gatters U zugeführt, dessen Ausgang den elektronischen Schalter S steuert. Über diesen liegt der Widerstand R1 des ersten Serien-RC-Gliedes R1, C1 an der Synchronsignaltrennschaltung KS. Die Polaritäten der entsprechenden Digitalsignale sind dabei so gewählt, daß der Schalter S im Bereich der gesendeten Bildsynchronimpulse nur während den zeilenfrequenten Torimpulsen geschlossen ist, so daß das genannte RC-Glied R1, C1 während der restlichen Zeit von der Synchronsignaltrennschaltung KS abgeschaltet ist. Dadurch ist die Klemmregelschaltung nur während der Zeilensynchronimpulse freigegeben, so daß der am Kondensator C1 erzeugte Abtrennpegel durch die gesendeten Bildsynchronimpulse oder andere Störungen, vor allem während des Zeilenhinlaufs, nicht verändert werden kann.

Da die zeilensynchronen Ausgangsimpulse der Torschaltung TS sinnvoll nur verwendbar sind, wenn der Zeilenoszillator VCO synchron mit dem FBAS-Signal F ist, wird die Verriegelung der Klemmregelschaltung unwirksam, wenn die Koinzidenzstufe KO durch Vergleich der abgetrennten Zeilensynchronimpulse mit den Torimpulsen Nichtsynchronismus feststellt.

Der Widerstand-Kondensator-Verbindungspunkt des RC-Glieds R1, C1 ist über den weiteren Widerstand R3 mit dem kondensatorabgewandten Anschluß des Widerstands R2 des zweiten Serien-RC-Glieds R2, C2 verbunden, welcher Anschluß auch in die Klemmregelschaltung der Synchronsignaltrennschaltung KS führt. Der erwähnte Verbindungspunkt des RC-Glieds R1, C1, führt ebenfalls in die Klemmregelschaltung, wie dies die eingangs genannte erste Literaturstelle zeigt.

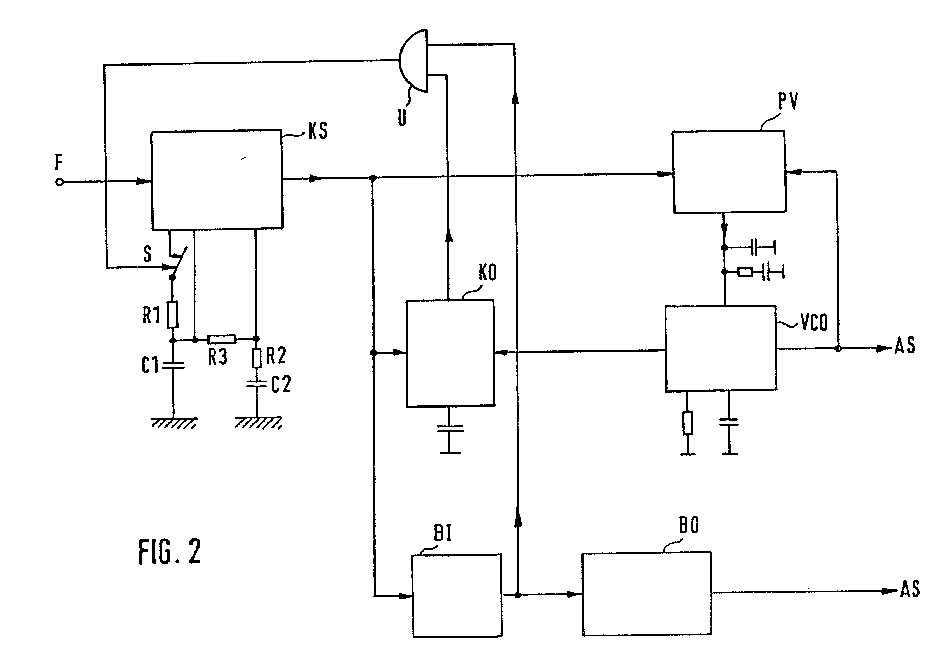

In Fig. 2 ist eine Vereinfachung der Anordnung nach Fig. 1 gezeigt, die darin besteht, daß auf die Torschaltung TS verzichtet ist. Wenn also integrierte Schaltungen entsprechend dem Oberbegriff des Anspruchs ohne die dort genannte Torschaltung realisiert werden sollen, so wird dem Eingang des UND-Gatters U, der nach Fig. 1 mit dem Inverter I in Verbindung steht, das Ausgangssignal der Integrierstufe BI zur Erzeugung der internen Bildsynchronimpulse zugeführt. Am erwähnten UND-Gatter-Eingang liegen also die aufbereiteten Bildsynchronimpulse, die im übrigen auch den Bildoszillator (BO) synchronisieren.

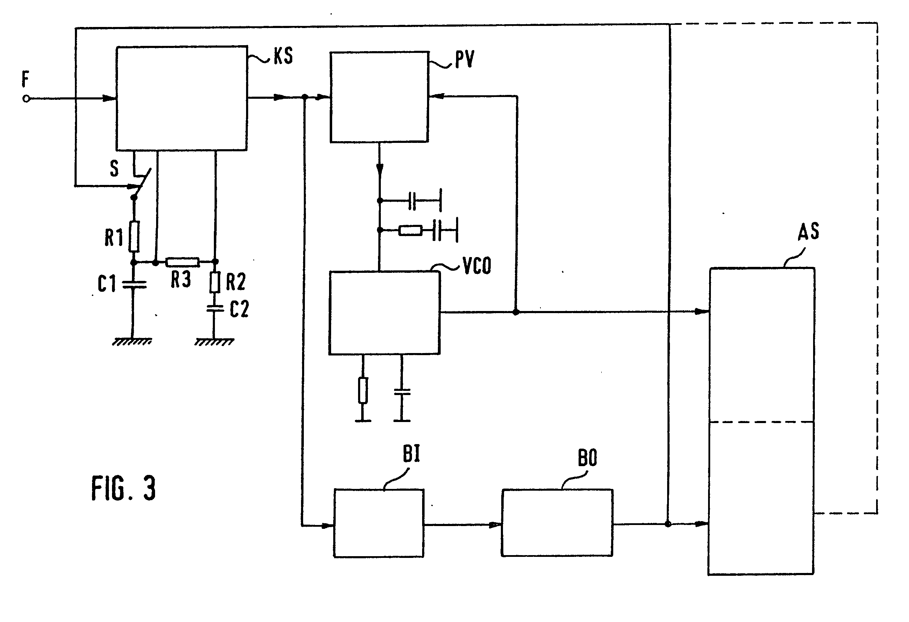

Schließlich zeigt die Fig. 3 eine weitere Vereinfachung, bei der auf die Koinzidenzstufe KO und das UND-Gatter U verzichtet werden kann. Der Schalter S wird in diesem Fall von den Bildrücklaufimpulsen direkt angesteuert. Diese können einmal am Ausgang des Bildoszillators BO abgenommen werden oder aus den Ablenkstufen AS stammen. Die letztere Möglichkeit ist in Fig. 3 durch die gestrichelte Verbindungsleitung angedeutet.

**Anspruch**

Integrierte Schaltung für Fernsehempfänger mit einer Synchronsignaltrennschaltung (KS) mit Klemmregelschaltung, die den relativen Abtrennpegel für das Synchronsignal unabhängig von dessen Amplitude macht, wobei der Integration des Abtrennpegels und des Schwarzschulterpegels ein erstes und ein zweites, jeweils mit dem Kondensator (C1, C2) am Schaltungsnullpunkt liegendes Serien-RC-Glied (R1, C1 ; R2, C2) dienen, bei denen der Widerstand-Kondensator-Verbindungspunkt des ersten RC-Glieds (R1, C1) über einen Widerstand (R3) mit dem kondensatorabgewandten Anschluß des Widerstand (R2) des zweiten RC-Glieds (R2, C2) verbunden ist, mit einer Koinzidenzstufe (KO) zur Abgabe zweier unterschiedlicher Signalpegel bei synchronem bzw. nichtsynchronem Betrieb, mit einem spannungsgesteuertem Zeilenoszillator (VCO), mit einem Phasenvergleicher (PV) für die Zeilenoszillator- und die Zeilensynchronsignale, mit einer Torschaltung (TS), bei der die Ausgangsimpulsdauer mindestens gleich der Dauer der gesendeten Zeilensynchronimpulse einer Zeile ist, mit einer Integrierstufe (BI) zur Erzeugung der internen Bildsynchronimpulse und mit einem von ihnen synchronisierten Bildoszillator (BO), dadurch gekennzeichnet, daß der kondensatorabgewandte Anschluß des Widerstands (R1) des ersten RC-Glieds (R1, C1) über einen elektronischen Schalter (S) mit der Klemmregelschaltung verbunden ist, dessen Steuereingang entweder das Ausgangssignal der Koinzidenzstufe (KO) und das invertierte Ausgangssignal der Torschaltung (TS) über ein UND-Gatter (U) (Fig. 1) oder bei entfallender Torschaltung (TS) das Ausgangssignal der Koinzidenzstufe (KO) und das der Integrierstufe (BI) über ein UND-Gatter (U) (Fig. 2) oder bei entfallender Torschaltung (TS) und Koinzidenzstufe (KO) die Bildrücklaufimpulse zugeführt sind (Fig. 3).

**Claim**

Integrated circuit for television receivers comprising a sync separator (KS) with a clamping circuit which makes the relative separation level for the synchronizing signal independent of the amplitude of the latter, the separation level and the porch being integrated by means of a first series RC section (R1, C1) and a second series RC section (R2, C2) which both have their capacitors (C1, C2) grounded and wherein the resistor-capacitor junction of the first RC section (R1, C1) is connected via a resistor (R3) to that terminal of the resistor (R2) of the second RC section (R2, C2) not connected to the capacitor (C2) ; a coincidence stage (KO) providing two different signal levels in a synchronous and an asynchronous mode, respectively ; a voltage-controlled horizontal oscillator (VCO) ; a phase comparator (PV) for the horizontal-oscillator and horizontal synchronizing signals ; a gate circuit (TS) whose output pulses are at least equal in duration to the transmitted horizontal synchronizing pulses of on line ; an integrator (BI) for generating the internal vertical synchronizing pulses, and a vertical oscillator (BO) synchronized by the internal vertical synchronizing pulses, characterized in that the terminal of the resistor (R1) of the first RC section (R1, C1) not connected to the capacitor (C1) is connected to the clamping circuit via an electronic switch (S) whose control input is fed either with the output signal of the coincidence stage (KO) and the inverted output signal of the gate circuit (TS) via an AND gate (U) (Fig. 1) or if the gate circuit (TS) is omitted, with the output signal of the coincidence stage (KO) and that of the integrator (BI) via an AND gate (U) (Fig. 2) or if the gate circuit (TS) and the coincidence stage (KO) are omitted, with the vertical retrace pulses (Fig. 3).

## Revendication

Circuit intégré pour récepteurs de télévision, comportant : un circuit (KS) de séparation du signal de synchronisation, avec un circuit de verrouillage qui rend le niveau relatif de séparation du signal de synchronisation indépendant de son amplitude, l'intégration du niveau de séparation et du niveau de palier du noir étant faite en utilisant un premier et un deuxième ensembles RC série (R1, C1 ; R2, C2) ayant chacun son condensateur (C1 ; C2) relié au point zéro du circuit, le point de connexion résistance-condensateur du premier ensemble RC (R1, C1) étant, via une résistance (R3), relié à la borne, non située côté condensateur, de la résistance (R2) du deuxième ensemble RC (R2, C2) ; un étage à coïncidence (KO) pour émettre deux différents niveaux de signal, respectivement pour marche synchrone et pour marche non synchrone ; un oscillateur « ligne » (VCO) commandé en tension ; un comparateur de phase (PV) pour les signaux de l'oscillateur « ligne » et de synchronisation « ligne » ; un circuit de porte (TS) dont les impulsions de sortie ont une durée au moins égale à celle des impulsions de synchronisation « ligne » émises pour une ligne ; un étage intégrateur (BI), pour engendrer les impulsions de synchronisation d'images internes ; et un oscillateur « image » (BO) synchronisé par ces dernières, ce circuit intégré étant caractérisé en ce que la borne, non située côté condensateur, de la résistance (RI) du premier ensemble RC (R1, C1) est reliée, via un interrupteur électronique (S), au circuit de régulation-verrouillage dont l'entrée de commande reçoit : soit, via une porte ET (U), le signal de sortie de l'étage à coïncidence (KO) et le signal de sortie du circuit de porte (TS) inversé ; soit, en l'absence de circuit de porte (TS), via une porte ET (U), le signal de sortie de l'étage à coïncidence (KO) et le signal de sortie de l'étage intégrateur (BI) ; soit, s'il n'y a ni circuit de porte (TS) ni étage à coïncidence (KO), les impulsions de retour d'image.

0 069 791

FIG. 1

FIG. 2

AS

PV

VCO

B0

BI

KS

S

R1

C1

R3

R2

C2

F

FIG. 3